# EUROPEAN PATENT APPLICATION

(11) **EP 4 498 705 A1**
(43) Date of publication of application: **29.01.2025**
(21) Application number: 24190659.3
(22) Date of filing: 24.07.2024
(51) Int. Cl.: H04S 3/00

(54) **METHOD FOR PROCESSING 3D AUDIO**

(30) Priority: 27.07.2023 GB 202311524
(71) Applicant: Sony Interactive Entertainment Europe Limited, London W1F 7LP (GB)
(72) Inventor: SCHEMBRI, Danjeli, London, W1F 7LP (GB)
(74) Representative: Gill Jennings & Every LLP

(57) **Abstract**

A computer-implemented method for processing 3D audio, the method comprising: there is provided a computer-implemented method for processing 3D audio, the method comprising: obtaining a first ambisonic signal representing a sound; and upmixing the first ambisonic signal to derive a second ambisonic signal representing the sound; wherein the second ambisonic signal is a higher quality representation of the sound than the first ambisonic signal. This reduces the storage and processing requirements of providing high quality 3D audio.

## Description

### FIELD OF THE INVENTION

The present invention relates to the field of 3D audio. In particular, the invention relates to methods and systems for processing 3D audio.

### BACKGROUND

3D audio refers to an immersive audio experience that simulates a three-dimensional sound environment to enhance the listening experience by providing a more spatially realistic and immersive sound environment. While traditional stereo audio provides a flat, two-dimensional sound field, the three-dimensional sound environment provided by 3D audio technology can create the perception of sounds coming from different distances and directions, including above and below the listener.

3D audio is used in a variety of applications including video gaming, virtual reality, augmented reality, films, and music. It can enhance the realism of a virtual environment, provide a more engaging gaming experience, and create a more lifelike and immersive film or music listening experience. 3D audio can also be used in applications such as sound design, audio engineering, and acoustic simulation to provide more accurate and detailed spatial information about sound sources.

Various techniques can be employed to provide 3D audio including binaural audio rendering, Ambisonics, and object-based audio. Binaural audio simulates the effect of sound arriving at a listener's ears from different directions by using headphones, taking into account various acoustic cues (such as time delay and frequency response) that occur as sound waves travel through the air. Ambisonics uses multiple channels of audio to capture a spherical sound field, which can be decoded into different speaker configurations to produce 3D audio. Object-based audio is a technique that involves coding audio objects with metadata to describe the position and motion of the sound, allowing a playback system to render the audio objects in 3D space.

While 3D audio can provide an immersive and realistic audio experience, in practice the implementation of these techniques come with challenges and limitations. For example, creating and rendering a 3D audio environment can be computationally intensive, requiring significant processing power and memory resources. This can limit the scalability of 3D audio technology, particularly when it is applied in situations where real-time performance is critical, such as in video games and virtual reality.

Accordingly, there is a need for a solution that reduces the computational requirements for providing 3D audio.

### SUMMARY OF INVENTION

In a first aspect of the invention, there is provided a computer-implemented method for processing 3D audio, the method comprising: obtaining a first ambisonic signal representing a sound; and upmixing the first ambisonic signal to derive a second ambisonic signal representing the sound; wherein the second ambisonic signal is a higher quality representation of the sound than the first ambisonic signal.

The ambisonic signal can then be binauralised for output on headphones or played on a surround speaker system using a multi-speaker ambisonic render.

The first and second ambisonic signals both represent the same sound, with the second ambisonic signal being a higher quality representation of the sound than the first ambisonic signal. That is, the first and second ambisonic signals will sound similar to a listener though the second ambisonic signal will be of higher fidelity and more accurately reproduce localisation of the sound. As the second ambisonic signal is a higher quality representation, it requires a greater quantity of memory resources to be stored and more processing power to be played back. Conversely, the first ambisonic signal does not require as many memory resources to be stored.

In this way, the first ambisonic signal may be stored and not played, while the second ambisonic signal may be played without needing to be stored. The method of the invention therefore provides high quality 3D audio playback of a sound while reducing the storage required for this high quality playback. This also means the sound does not need to be initially recorded or synthesised as a higher quality ambisonic signal (e.g. in a higher quality 3D audio format), allowing the audio engineer to record using simpler equipment compared to the conventional approach where a sound must be recorded (or synthesised) at a high quality in order to be played at that high quality.

Preferably, upmixing the first ambisonic signal comprises: applying a trained machine learning model to the first ambisonic signal, wherein the trained machine learning model is configured to output the second ambisonic signal from the first ambisonic signal.

Optionally, the trained machine learning model is an artificial neural network.

Optionally, the trained machine learning model is a variational autoencoder

Preferably, the second ambisonic signal has a higher spatial resolution of the sound than the first ambisonic signal. Spatial resolution refers to the accuracy and detail of the spatial information in the sound signal. A ambisonic signal with higher spatial resolution will provide a more realistic and immersive listening experience. In this way, the method achieves high spatial resolution playback of a sound without the space or processing requirements associated with storing a high spatial resolution ambisonic signal.

Preferably, the second ambisonic signal is a higher order Ambisonic than the first ambisonic signal. That is, both the first ambisonic signal and the second ambisonic signal are Ambisonic audio signals, with the second ambisonic signal being a higher order Ambisonic with a greater number of channels than the first ambisonic signal.

Preferably, the first ambisonic signal is a first order Ambisonic. The first order Ambisonic is the lowest order Ambisonic, providing a ambisonic signal with the lowest spatial resolution with 4 channels of audio and the lowest storage memory requirements (relative to other Ambisonic orders, which increase in memory usage exponentially). Having the first ambisonic signal be a first order Ambisonic means the storage requirements for providing 3D audio are minimised.

Preferably, the second ambisonic signal is a fifth order Ambisonic or even higher. It has been found that higher order Ambisonic represent sound as a ambisonic signal with a higher degree of spatial resolution, providing high quality 3D audio. Having the first ambisonic signal as a first order Ambisonic and the second ambisonic signal as a higher order Ambisonic has been found to be particularly advantageous, providing the low storage requirements of the first order Ambisonic along with the high quality 3D audio of the higher order Ambisonic, while also balancing the processing when upmixing the first ambisonic signal to derive the second ambisonic signal.

Preferably, the sound comprises a video game sound effect. The method has been found to be particularly advantageous for upmixing video game sound effects, as real-time performance of processing is critical to provide and maintain a good user experience while playing a video game. Preferably, when the sound comprises a video game sound effect, the method is a method for processing 3D audio for a video gaming system.

Preferably, the sound is an ambient sound effect. Upmixing the first ambisonic signal to derive the second ambisonic signal may inadvertently change non-spatial properties of the first ambisonic signal, for example the timbral properties of the audio signal. It has been determined that such changes are fewer in number, less severe, and/or less noticeable by a listener when the sound represented by the ambisonic signal is an ambient sound effect. Therefore the method is particularly advantageous when upmixing ambisonic signals representing ambient sound effects. Ambient sound effects refer to sounds such as wind, footsteps, rain, waves and other sounds which may be considered background noise, rather than other sounds such as dialogue. Ambient sound effects may be considered sound effects associated with the scenery of the virtual environment, or background noise of a virtual environment. Ambient sound effects may be sound effects that are output continuously in a virtual environment. The ambient sound effect may an ambient sound effect in a video game.

Preferably, the method further comprises determining a type of the sound represented by the first ambisonic signal; wherein upmixing the first ambisonic signal is based on the type of the sound.

Types of sound include but are not limited to ambient sounds, dialogue, music, player sound effects, non-player sound effects, diegetic and non-diegetic sounds. The type of the sound may be determined using an identifier of the sound and/or first ambisonic signal, such as a tag, metadata or another identifier. Alternatively, the type of the sound may be determined by analysing the ambisonic signal, such as its properties and/or waveform(s).

Upmixing the first ambisonic signal being based on the determined type of sound may refer to the degree of upmixing performed when deriving the second ambisonic signal, or whether upmixing is performed at all.

For example, optionally, when determining a type of the sound is a first sound type, upmixing the first ambisonic signal may derive the second ambisonic signal, and when determining a type of the sound is a second sound type, upmixing the first ambisonic signal may derive a third ambisonic signal representing the sound, where the third audio signal is a higher quality representation of the sound than the first ambisonic signal and the second ambisonic signal.

Preferably, the first ambisonic signal is obtained from a memory component (such as local storage component or external storage), wherein the memory component does not comprise the second ambisonic signal. In this way, the higher quality second ambisonic signal does not need to be stored and storage resources are saved.

Preferably, the method further comprises decoding the second ambisonic signal for playback. The second ambisonic signal may be decoded for playback by headphones, speaker(s), or any other playback device or system.

Preferably, the method further comprises outputting the decoded second ambisonic signal.

Preferably, the sound is a first sound in an audio signal, and the audio signal further comprises a second sound which is different to the first sound; the method further comprising obtaining a third ambisonic signal representing the second sound; upmixing the third ambisonic signal to derive a fourth ambisonic signal representing the sound; wherein the fourth ambisonic signal is a higher quality representation of the second sound that the third ambisonic signal.

The audio signal is a to-be-output audio signal intended for playback to a user and includes a plurality of sounds. The sounds are different assets or elements which make up the audio signal, for example a first sound may be a rain sound effect in a video game, and a second sound may be a footsteps sound effect in the video game. A plurality of sounds in the audio signal may be played simultaneously and so are audible at the same time when the audio signal is played back - that is, sounds of the different assets or elements comprised in the audio signal are layered on top of each other. Many applications such as video games use audio signals comprising a plurality of sounds, where the importance of high-quality localisation and/or fidelity is different for different sounds in the audio signal. Therefore, in this way, different sounds in the audio signal can be upmixed independently of each other.

Preferably, the first ambisonic signal is the same order Ambisonic as the third ambisonic signal, and the second ambisonic signal is a different order Ambisonic to the fourth ambisonic signal.

In this way, the different sounds in the audio signal are individually upmixed to different degrees. The degree of upmixing to be applied to a sound in the audio signal may be determined based on the type of the sound.

In a second aspect of the invention there is provided a method for training a machine learning model to upmix a ambisonic signal , the method comprising, for a plurality of sounds: for each sound in the plurality of sounds: obtaining a first ambisonic signal representing the sound; and obtaining a second ambisonic signal representing the sound, wherein the second ambisonic signal is a higher quality representation of the sound than the first ambisonic signal; using the first ambisonic signal as an input for the machine learning model, and the second ambisonic signal as the intended output for the machine learning model, training a machine learning model to upmix a lower quality ambisonic signal to derive a higher quality ambisonic signal.

According to a third aspect, there is provided system for processing 3D audio, the system comprising: an obtaining unit configured to obtain a first ambisonic signal representing a sound; and an upmixing unit configured to upmix the first ambisonic signal to derive a second ambisonic signal representing the sound; wherein the second ambisonic signal is a higher quality representation of the sound than the first ambisonic signal.

It will be appreciated that elements of the first aspect apply to the second and third aspects, along with their associated advantages.

According to a fourth aspect, there is provided a computer program comprising computer-readable instructions which, when executed by one or more processors, cause the one or more processors to perform a method according to the first aspect.

According to a fifth aspect, there is provided a non-transitory storage medium storing computer-readable instructions which, when executed by one or more processors, cause the one or more processors to perform a method according to the first aspect.

### BRIEF DESCRIPTION OF DRAWINGS

Embodiments of the invention are described below, by way of example only, with reference to the accompanying drawings, in which:
Figure 1 is a flow chart of an example of a method in accordance with an embodiment of the invention;
Figure 2 schematically illustrates Ambisonic Channel Numbers corresponding to the spherical harmonics up to the fifth order Ambisonics;
Figures 3A and 3B schematically illustrate first and second ambisonic signals representing a sound;
Figure 4 schematically illustrates an example of an artificial neural network; and
Figure 5 is a flow chart example of a 1^{st} order Ambisonic signal upmixed to a 5^{th} order ambisonic signal.

### DETAILED DESCRIPTION

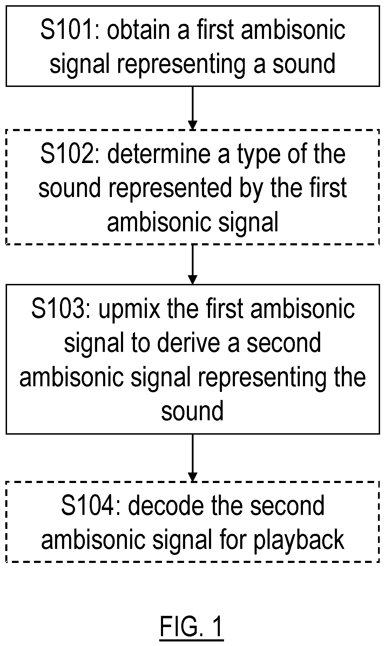

Figure 1 is a flow chart showing the steps of an example of a method in accordance with an embodiment of the invention. Dashed boxes (steps S102 and S104) indicate optional steps of the method.

In step S101, a first ambisonic signal representing a sound is obtained. The first ambisonic signal could be obtained from a local storage component or remotely from external storage.

Ambisonic audio signals include multiple channels of audio to capture a spherical sound field, where each channel corresponds to a spherical harmonic used to represent the sound field. Higher-order Ambisonics use a greater number of channels to capture the sound field with even greater accuracy, though these higher orders also require greater storage and processing requirements.

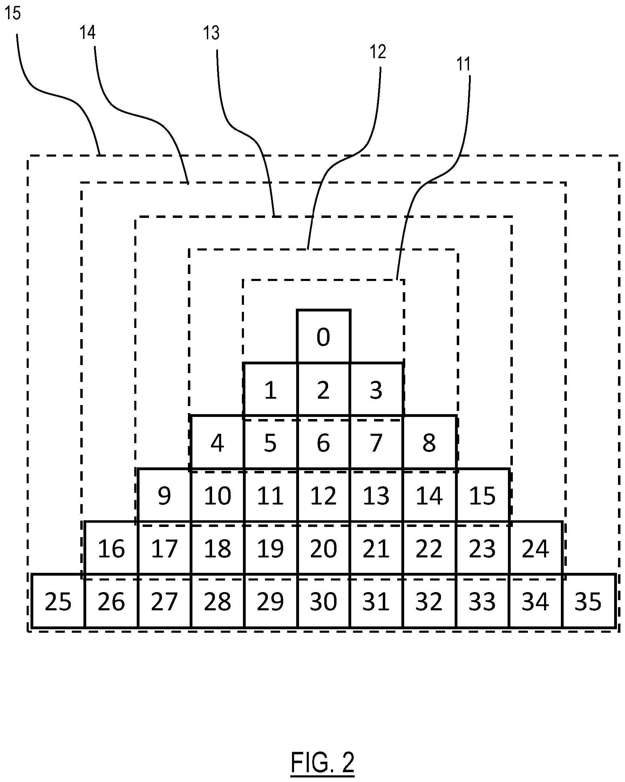

The maximum number of channels in a given order Ambisonic is equal to (*l* + 1)², where *l* is the order of the Ambisonic, with higher order Ambisonics including all channels of lower order Ambisonics. Figure 2 schematically illustrates the channels of the first to fifth order Ambisonics using the Ambisonic Channel Numbers (ACN) component ordering format, with channels shown as solid boxes and orders of Ambisonics grouping these channels within dashed boxes. The first order Ambisonic 11 includes channels 0 to 3, the second order Ambisonic 12 includes channels 0 to 8, the third order Ambisonic 13 includes channels 0 to 15, the fourth order Ambisonic 14 includes channels 0 to 24, and the fifth order Ambisonic 15 includes channels 0 to 35.

In step S103, the first ambisonic signal is upmixed to derive a second ambisonic signal representing the sound. The first ambisonic signal and the second ambisonic signal each represent the same sound. For example, if the first ambisonic signal represents the sound of a series of footsteps then the second ambisonic signal will represent the sound of the same series of footsteps. However, upmixing the first ambisonic signal to derive the second ambisonic signal means that the second ambisonic signal is a higher quality representation of the sound than the first ambisonic signal. For example, the second ambisonic signal will have a higher spatial resolution than the first ambisonic signal.

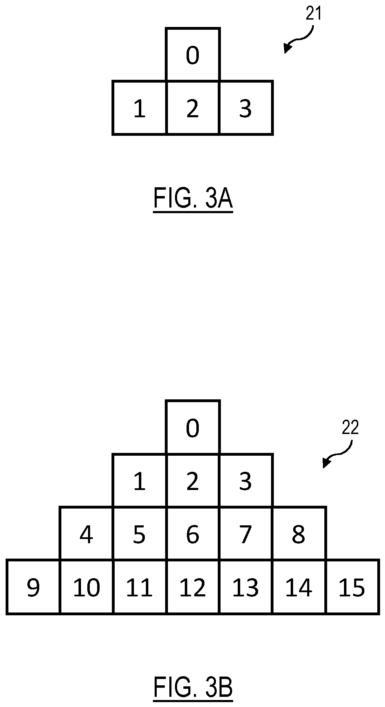

Figure 3A schematically illustrates the first ambisonic signal 21 as a first order Ambisonic, and Figure 3B schematically illustrates the second ambisonic signal 22 as a third order Ambisonic. The second ambisonic signal 22 comprises all the channels of the first ambisonic signal 21 (channels 0 to 3) and an additional 12 channels (channels 4 to 15), thereby providing more accurate and detailed spatial information about the represented sound than the first ambisonic signal 21 was capable of. It will be apparent that the second ambisonic signal 22 comprises a significantly greater amount of data than the first ambisonic signal 21, due at least to the additional 12 channels. However, as the second ambisonic signal 22 is derived from upmixing the first ambisonic signal 21, the second ambisonic signal 22 does not need to be stored or obtained from storage, only the lower storage cost first ambisonic signal 21 does. It is not necessary for every channel in a given order Ambisonic to be derived or used, for example in order to save resources, however this is typically preferred in order to provide the greatest degree of spatial accuracy and immersion.

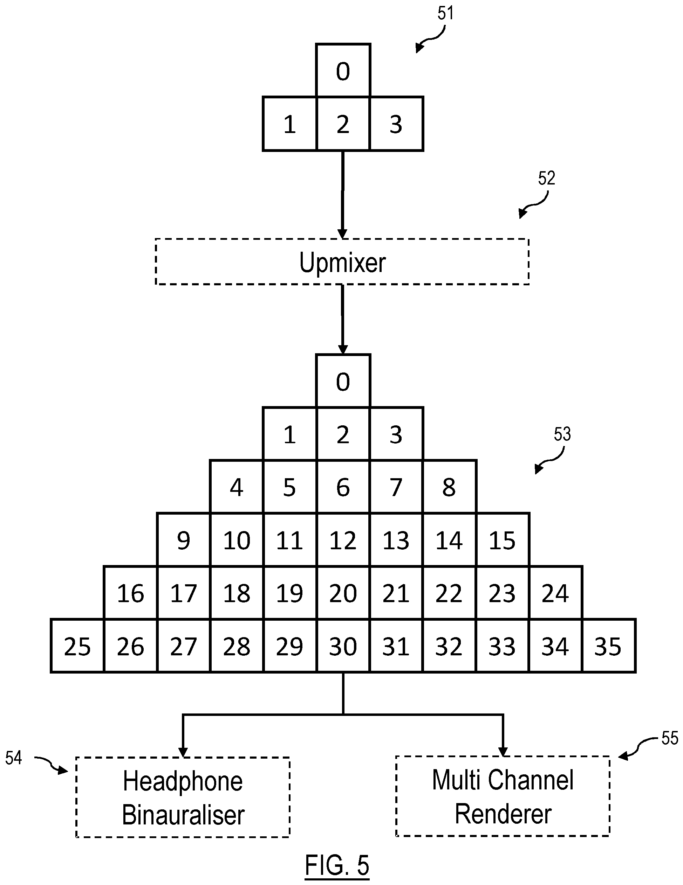

While the second ambisonic signal 22 shown in Figure 3B is a third order Ambisonic, this is an example and the first ambisonic signal 21 of Figure 3A may be upmixed to any higher order Ambisonic such as a second order Ambisonic, fourth order Ambisonic, or fifth or higher order Ambisonic. Figure 5 shows a flow chart illustrating how a first ambisonic signal 51, which is a first order Ambisonic, is upmixed by an upmixer 52 (i.e. the upmixer 52 is applied to the first ambisonic signal 51) to derive a second order ambisonic signal 53, which is a fifth order Ambisonic.

In some examples of the invention, step S102 may be performed before step S103. In step S102, a type of the sound represented by the first ambisonic signal is determined. Different types of sounds may be upmixed by different extents depending on the type determined. It will be appreciated that this may depend on the implementation of the method. For example, the method may be implemented in a manner where dialogue sounds are not upmixed at all, where ambient sounds above a given threshold (e.g. a threshold frequency, amplitude, virtual distance from listener and so on) are upmixed by a first extent (e.g. from a first order ambisonic to a second order Ambisonic) and where ambient sounds below a given threshold are upmixed by a second extent that is different to the first extent (e.g. from a first order ambisonic to a third order Ambisonic).

In some examples, step S104 may be performed after step S103. In step S104, the second ambisonic signal is decoded for playback. The manner of decoding depends on intended playback system (e.g. headphones, stereo speakers, 5.1 surround sound, 7.1 surround sound) as shown in the example of Figure 5. A Headphone Binauraliser 54 may decode the second ambisonic signal 53 for playback on headphones, while a Multi Channel Renderer 55 may decode the second ambisonic signal 53 for playback on stereo speakers, 5.1 surround sound etc.

In some examples of the invention, the sound is a first sound of a plurality of sounds in an audio signal. In such cases, different sounds of the audio signal may be upmixed (or not) independently of one another. For example, by upmixing the first sound from a first order Ambisonic to a third order Ambisonic, and upmixing a second sound (which is different from the first sound) from a first order Ambisonic to a second order Ambisonic. Both upmixed ambisonic signals can be decoded for simultaneous playback during playback of the audio signal.

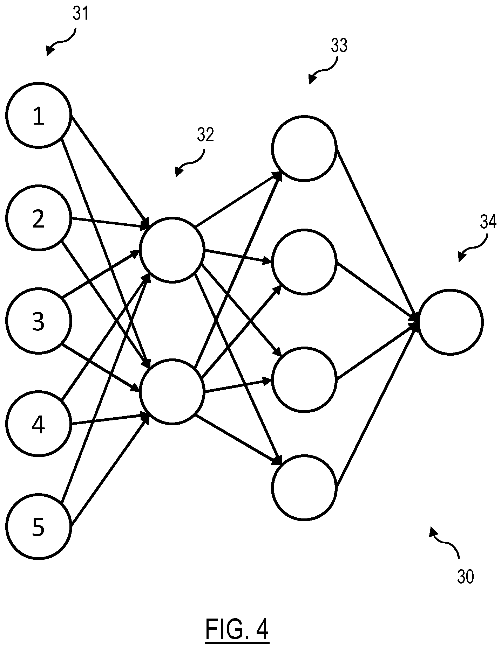

In some examples of the invention, the upmixing in step S103 is performed using a machine learning model such as a variational auto encoder. In particular, a trained machine learning model is applied to the first ambisonic signal, where the trained model is configured to output the second ambisonic signal. Figure 4 shows a schematic diagram of an example of an artificial neural network 30, a type of machine learning model, comprising four layers; an input layer 31 with five nodes, a first hidden layer 32 with two nodes, a second hidden layer 33 with four nodes, and an output layer 34 with a single node. The machine learning model 30 may be trained using a library of lower quality ambisonic signals and higher quality ambisonic signals representing a sound, where a first ambisonic signal is used as an input and a second ambisonic signal (a higher quality representation of the same sound as the first ambisonic signal) is the intended output. That is, in this example, the library would comprise a plurality of ambisonic signals representing a plurality of sounds, with sounds represented at least twice by a lower quality ambisonic signal and a higher quality ambisonic signal. A lower quality ambisonic signal may be obtained in a number of ways. For example by recording a sound in a lower quality ambisonic format, or by downmixing a higher quality ambisonic signal to obtain the lower quality ambisonic signal. Each node may have one or more learnable weights that may be adjusted during training in order to optimise the model 30. Each node in the neural network may have one or more learnable weights that may be adjusted during training in order to optimise the model 30, minimising the different between a predicted output (when a higher quality ambisonic signal is derived from upmixing an input lower quality ambisonic signal) and the actual output (the known second ambisonic signal representing the same sound as the input ambisonic signal).

Having described aspects of the disclosure in detail, it will be apparent that modifications and variations are possible without departing from the scope of aspects of the disclosure as defined in the appended claims. As various changes could be made in the above methods and products without departing from the scope of aspects of the disclosure, it is intended that all matter contained in the above description and shown in the accompanying drawings shall be interpreted as illustrative and not in a limiting sense.

## Claims

1. A computer-implemented method for processing 3D audio, the method comprising:
obtaining a first ambisonic signal representing a sound; and
upmixing the first ambisonic signal to derive a second ambisonic signal representing the sound;
wherein the second ambisonic signal is a higher quality representation of the sound than the first ambisonic signal.

2. The method of claim 1, wherein upmixing the first ambisonic signal comprises: applying a trained machine learning model to the first ambisonic signal, wherein the trained machine learning model is configured to output the second ambisonic signal from the first ambisonic signal.

3. The method of any preceding claim, wherein the sound is a first sound in an audio signal, and the audio signal further comprises a second sound different to the first sound; the method further comprising
obtaining a third ambisonic signal representing the second sound;
upmixing the third ambisonic signal to derive a fourth ambisonic signal representing the sound;
wherein the fourth ambisonic signal is a higher quality representation of the second sound that the third ambisonic signal.

4. The method of claim 3, wherein the first ambisonic signal is the same order Ambisonic as the third ambisonic signal, and the second ambisonic signal is a different order Ambisonic to the fourth ambisonic signal.

5. The method of any preceding claim, wherein the second ambisonic signal has a higher spatial resolution of the sound than the first ambisonic signal.

6. The method of any preceding claim, wherein the second ambisonic signal is a higher order Ambisonic than the first ambisonic signal.

7. The method of claim 6, wherein the first ambisonic signal is a first order Ambisonic.

8. The method of claim 6 or 7, wherein the second ambisonic signal is a fifth-order Ambisonic.

9. The method of any preceding claim, wherein the sound comprises a video game sound effect.

10. The method of any preceding claim, wherein the sound is an ambient sound effect.

11. The method of any preceding claim, further comprising: determining a type of the sound represented by the first ambisonic signal; wherein upmixing the first ambisonic signal is based on the type of the sound.

12. The method of any preceding claim, wherein the first ambisonic signal is obtained from a memory component, wherein the memory component does not comprise the second ambisonic signal.

13. The method of any preceding claim, further comprising: decoding the second ambisonic signal for playback.

14. A method for training a machine learning model to upmix an ambisonic signal, the method comprising, for a plurality of sounds:
for each sound in the plurality of sounds:
obtaining a first ambisonic signal representing the sound; and
obtaining a second ambisonic signal representing the sound,
wherein the second ambisonic signal is a higher quality representation of the sound than the first ambisonic signal;
using the first ambisonic signal as an input for the machine learning model, and the second ambisonic signal as the intended output for the machine learning model, training a machine learning model to upmix a lower quality ambisonic signal to derive a higher quality ambisonic signal.

15. A system for processing 3D audio, the system comprising:
an obtaining unit configured to obtain a first ambisonic signal representing a sound; and
an upmixing unit configured to upmix the first ambisonic signal to derive a second ambisonic signal representing the sound;
wherein the second ambisonic signal is a higher quality representation of the sound than the first ambisonic signal.
